# EUROPEAN PATENT SPECIFICATION

(11) **EP 0 480 030 B1**
(45) Date of publication and mention of the grant of the patent: **01.06.1994**
(21) Application number: 90906339.8
(22) Date of filing: 18.04.1990
(51) Int. Cl.: C05F 3/00, B02C 19/22

(54) **METHOD AND APPARATUS FOR COMPOSTING MIXTURE OF LIVESTOCK EXCRETION AND BARN MAT**
VERFAHREN UND ANLAGE ZUR KOMPOSTIERUNG EINER MISCHUNG VON EXKREMENTEN DER VIEHZUCHT UND STALLBODENBEDECKUNGSMATERIAL
PROCEDE ET APPAREIL PERMETTANT DE FAIRE DU COMPOST AVEC UN MELANGE COMPOSE D'EXCREMENTS D'ORIGINE ANIMALE ET DE MATERIAU EMPLOYE POUR RECOUVRIR LE SOL DES ETABLES

(43) Date of publication of application: 15.04.1992
(73) Proprietor: INOUE, Satoshi, Naka-gun, Kanagawa 255 (JP)
(72) Inventor: INOUE, Satoshi, Naka-gun, Kanagawa 255 (JP)
(74) Representative: DIEHL GLAESER HILTL & PARTNER
(86) International application number: JP9000501
(87) International publication number: WO9116279

(56) References cited:
- EP-A- 0 279 076
- GB-A- 301 105
- JP-A- 4 980 001
- JP-U-58 121 349

## Description

The present invention relates to a method and apparatus for composting within a short period of time a mixture of livestock excrements such as chicken feces, cow feces, etc., and organic materials such as wood chips, barks, straws, and rice hulls, etc. utilized as either bedding or a moisture adjusting medium for the cattle shed, etc. .

Livestock excrements such as chicken feces and cow feces is utilized as a compost in the form of a mixture with bedding in barn which is used in the cattle shed or the chicken house as a water absorbent (hereinafter referred to simply as "bedding") . While rice straw has been conventionally used as the main material for bedding, rice straw facilitates preparation of compost, since composting is relatively quickly promoted by the action of decomposing microorganisms in the case of rice straw. Meanwhile, with the advent of mechanization of means of farming, such as introduction of combine harvester, recovery of rice straw has been rendered much more difficult than before, and consequently sawdust, wood chips, barks, etc. have come into wide use as its substitutes.

As it is, it takes one to three years, which period varying with the kind of tree, whether broad-leaved trees or needle-leaf trees, for such kind of wood-derived bedding to become usable as compost,since their major component is lignin which is not decomposed quickly.

The large-scale livestock farming which has come to be practised on a broad basis nowadays is inevitably accompanied by production of an enormous amount of livestock excrements, and if and when such excrements are left stand in a heap over an extended period of time, it emits bad odor and/or polluted effluents which are apt to create environmental pollution. Such public nuisance has already given rise to many social issues.

On the other hand, since microorganisms capable of decomposing lignin are extremely scarce in cultivated land, while they are quite abundant in forests in the natural ecological systems, application of insufficiently decomposed compost to the farm land poses many problems associated with its adverse effects on crops.

From GB-A-301105 there were known a process for preparing a fertilizer and an apparatus for carrying out this process. In this process bird manure is admixed with absorbent organic material. The admixed mass is then dried and may be disintegrated. To the organic material there may be added an acid or acid salt which serves only to neutralize the ammonia content of the manure. The apparatus for carrying out said process is a drier with a screw conveyor which causes the mixture of the above materials to be traversed from end to end of a heated trough wherein the screw conveyor rotates. After drying the mixture falls into a hopper from where it may be delivered to a disintegrator.

As the result of investigation made with a view to solving the foregoing problems and developing a method for quickly composting a mixture of bedding having a high lignin content and livestock excrements, the present inventor has discovered a method such that said mixture can be composted in a short period of time by means of decomposing hardly decomposable lignin contained in wood by nitration and oxidation using nitric acid, in the way of accelerating its chemical humification and decline of the carbon content ratio (C/N ratio) of the mixture.

The present inventor has observed that in order to cause such mixture of livestock excrements and bedding having a high lignin content to react with nitric acid, a physical treatment thereof is requisite to promote the permeation and reaction of nitric acid therein, and as a consequence has discovered a method to furthermore promote the process of composting.

The present inventor, moreover, has developed an apparatus by which the aforementioned reaction can be efficiently performed.

As a consequence of said discoveries and development, the present invention has been completed.

It, therefore, is a primary object of the present invention to provide a method for composting in a short period of time a mixture of livestock excrements and bedding having a high lignin content by means of decomposing the same by causing it to react with nitric acid.

Another object of the present invention is to provide a method for furthermore Promoting the composting process by physically treating a mixture of livestock excrements and bedding having a high lignin content for the purpose of accelerating permeation and reaction of nitric acid in said mixture.

Still an other object of the present invention is to provide an apparatus for performing the aforementioned methods.

The essential features of the invention are the subject-matter of independant claims 1 and 3, preferred features are the subject-matter of dependant claims 2, 4-6.

The livestock excrements as proposed in the present invention may be any kind of excrements of livestock, such as chicken, cattle, pig, and horse.

While cellulose-containing organic materials such as sawdust, woodchips, barks, straws and grasses are used as bedding, the present invention provides an excellent method for quick composting of bedding, particularly those having high lignin contents, for example, sawdust. wood chips and barks. As a matter of course, the present invention is also effective to accelerate composting of any kind of bedding such as straws and grasses which readily permits undelayed composting.

Humification of the aforementioned mixture of livestock excrements and bedding is chemically accelerated by the addition of 3 to 35 wt.% of nitric acid thereto and by kneading the thus prepared material,whereupon lignin and cellulose abundantly contained in wood such as sawdust and woodchips are nitrated and oxidized with nitric acid to be separated and decomposed, and consequently the carbon content ratio(C/N ratio) of the thus produced material decreases. According to the method provided by the present invention, there is achieved within a short period of time composting of a mixture of livestock excrements and said bedding by dint of chemical humification.

Nitric acid is added by 3 to 35 wt.%, preferably 8 to 18 wt.%. If the quantity of nitric acid added is less than 3 wt.% , the added nitric acid is consumed almost entirely in its reaction with ammonia contained in the mixture, and due to a shortage of nitric acid available for decomposition of lignin, satisfactory results cannot be achieved.

On the contrary, if the quantity of nitric acid exceeds 35 wt.%, there is produced excess water which renders the kneading operation difficult. While the compost produced by the method proposed in the present invention is finished into marketable dry pellets after being neutralized to pH 6 to 9, it is not desirable that nitric acid be added in excess of 35 wt.%, since at such a high nitric acid content much time and effort are required for neutralization.

A catalyst may be used upon addition of nitric acid, if necessary, or the pH level may be controlled to 6 to 9 by addition of lime or phosphate fertilizer.

According to the present invention, it is preferable for the purpose of completing composting within a short period of time that a pre-treatment be performed such that the aforementioned mixture of livestock excrements and bedding be cut and kneaded under pressure with its water content controlled to below a defined level.

Such physical steps of compression, kneading and cutting the raw material mixture contribute to acceleration of permeation and reaction of nitric acid on account of the elevated temperature and size reduction thereby achieved and as a consequence decomposition of the mixture is accelerated.

Accordingly, in the preferred embodiment of the present invention, for the step of adding nitric acid and kneading the aforementioned mixture of livestock excrements and bedding , a raw material, after having its water content adjusted to 75% or less, is first cut and kneaded under pressure, whereupon to the thus treated material there are added 3 to 35 wt.%, preferably 8 to 18 wt.%, of nitric acid. Then the mixture is kneaded under pressure with its water content controlled to 75% or less. As has been described in the foregoing, a catalyst may be used and the pH value may be adjusted, if necessary.

That is to say, by adding nitric acid in said manner to the treated raw material which has been physically caused to undergo heating and size reduction by means of compressed kneading, permeation and reaction of the added nitric acid are accelerated. The treated raw material is heated to 90°C or higher by physical friction and reaction with nitric acid as a consequence of continued compressed kneading of the raw material beyond the point of time where nitric acid is added, whereupon the decomposition of lignin,etc., by nitric acid is furthermore promoted. This stands for the second object of the present invention.

As a means to adjust the water content of the treated raw material,the compost product obtained according to the present invention,which has been dried into the pelletized form, is added to the raw material to hold its water content at 75% or below. If the water content is higher than 75%, kneading is performed only to an insufficient extent with the result that the temperature level requisite for promoting the reaction cannot be reached.

Furthermore, the methods provided by the present invention can be carried out by an apparatus for preparing organic manures which is characterized in that the front portion of a first cylindrical treating tank having a raw material charging hopper at its rear portion and having incorporated therein a pressure-feed means and a cutting/kneading means is interfluently connected through a gate with the rear portion of a second cylindrical treating tank having a take-out port at its front portion and having incorporated therein a pressure-feed means and a cutting/kneading means so as to be capable of communicating. A feed port for adding nitric acid is disposed at the rear portion of the second tank or at the front portion of the first tank.

Since said apparatus of the present invention comprises the first treating tank and the second treating tank, both of which having pressure-feed means and cutting/kneading means incorporated therein and being interfluently connected with each other through a gate, and since there is provided a nitric acid feed port either at the rear portion of the second tank or at the front portion of the first tank, a plurality of steps, i.e. heating, reaction, decomposition, etc. take place in the series of treating tanks within a short period of time, accompanied by oppressing of emission of bad odor.

The aforementioned means for cutting/kneading of said raw materials is preferably constructed of a plurality of rotary blades attached to a rotary shaft disposed in the treating tank and a plurality of fixed blades provided on the cylinder in a manner such that the latter protrude inwards so far as they are close to or slide along their counterpart rotary blades. Moreover, said fixed blades function as baffle plates for pressure-feeding of the raw material as they are provided in a manner such that their lengths of inward protrusion are adjustable.

Furthermore, the pressure-feed means is preferably constructed of a primary screw which conveys the raw material from the rear portion of the treating tank towards the front portion of the tank and a secondary screw is disposed at the front portion of the treating tank and revolves in an opposite direction to that of the primary screw.

Still furthermore, by means of constructing the pressure-feed means of a primary screw which forwards the raw material and a secondary screw which acts to push the raw material backwards, the pressure rendered to the raw material can be increased and with the aid of the kneading means the temperature in the treating tank is notably elevated.

An example of the apparatus for preparing organic manures (a composting apparatus) of the present invention is explained on the basis of the attached drawings below.

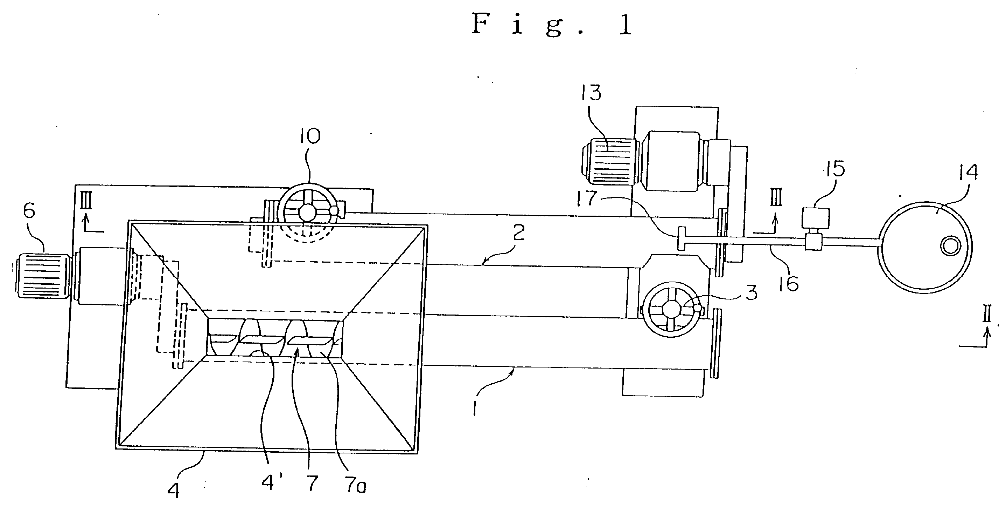

As shown in Fig. 1, the apparatus for preparing organic fertilizer is constructed of a cylindrical first treating tank (1) and a cylindrical second treating tank (2), which are interfluently connected through an open/close gate (3).

The first treating tank comprises a cylindrical body (1′) which has a raw material charging hopper (4) at its rear portion and an opening (5) connected to said open/close gate (3). There is provided inside this cylindrical body (1′) a screw conveyer (7) driven by a motor or the like and a cutting/kneading means (8).

The screw conveyer (7) conveys the raw material fed through the raw material charging hopper (4), while compressing such fed material,toward the open/close gate (3). It is desirable that in addition to a primary (main) screw (7a) which is partially exposed at the raw material charging hopper (4′), there is provided a secondary screw (7b) (reversing impellers) which revolves in an opposite direction to that of the primary screw (7a) so that said two screws operate in combination. This secondary screw is disposed opposite the primary screw (7a) in the neighbourhood of the opening (5) in the first treating tank so that the raw material pressure-fed by the primary screw (7a) is furthermore compressed.

The cutting/kneading means (8) is disposed downstream of the primary screw (7a) in the first treating tank, namely, between the primary screw (7a) and said secondary screw (7b).

This cutting/kneading means (8) consists of a plurality of rotary blades (8a) which are rotated by a driving system such as an electric motor and fixed blades (8b) which protrude inwards in the first treating tank in such a manner that they are counter-positioned to said rotary blades . These fixed blades function as baffle plates for pressure-feeding, besides assisting shearing of the raw material by the sliding motion between the fixed blades (8b) and the rotary blades (8a), and preventing co-rotation of the raw material with the rotary blades.

Hence, it is desirable that the fixed blades (8b) be equipped with a provision for adjustment which permits compensational protrusion or retraction as desired,preferably such devices as screw bolts, so that the raw material feed rate and temperature due to the degree of compression and friction may be controlled by means of adjusting the lengths of protrusion of the fixed blades (8b).

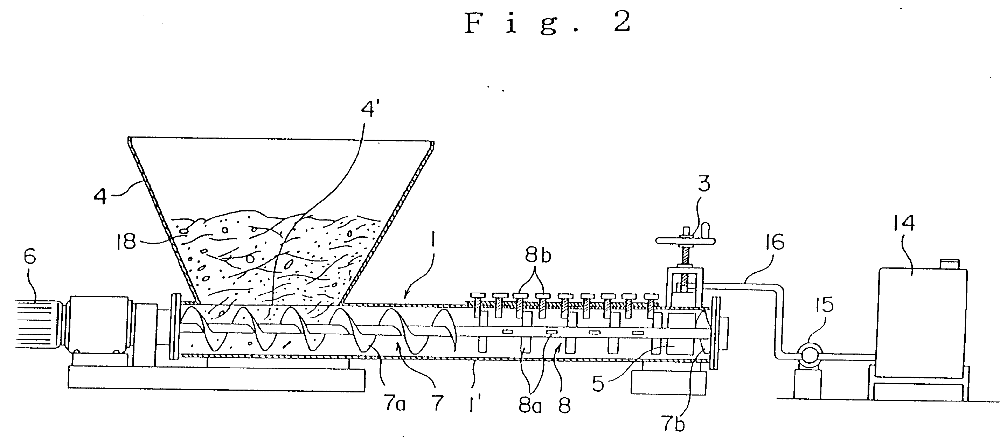

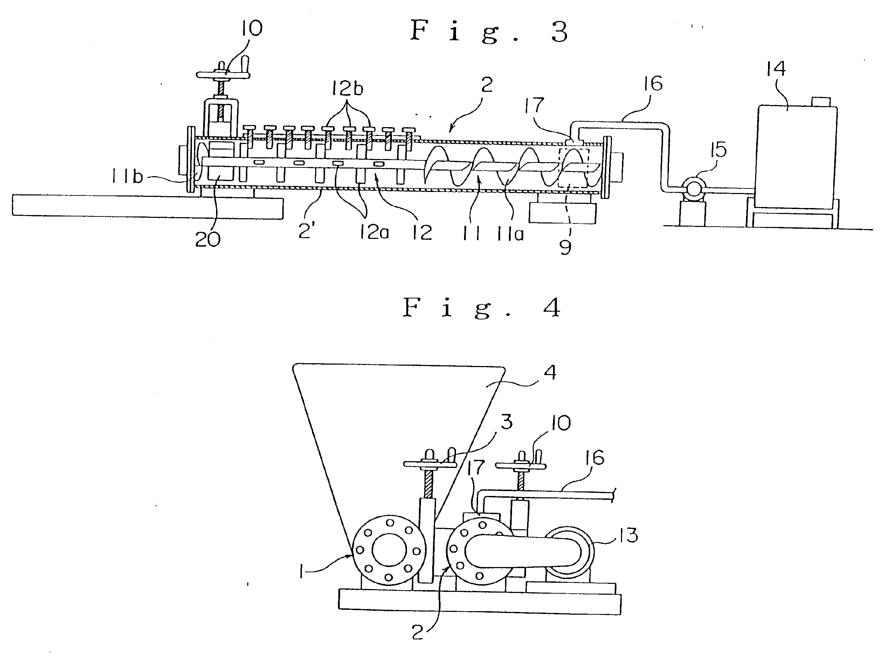

As illustrated in Fig. 2, the second treating tank (2) is constructed of a cylindrical body (2′) which has at its rear portion an entrance (9) which is interfluently connected to the first treating tank through the open/close gate (3) of said first treating tank and the open/close gate (10) at the opposite end. There are provided therein, alike the structure of the first treating tank,the pressure-feed means (11) consisting of a primary screw (11a) and a secondary screw (11b) , the latter of which conveys the raw material in an opposite direction to that of the primary screw (11a) and the cutting/kneading means (12) which consists of the rotary blades (12a) and the fixed blades (12b). These screws (11a and 11b) and the rotary blades (12a) are driven by a motor (13). There is provided at the rear portion of the second treating tank (2) a nitric acid feed port (17) to supply nitric acid into the tank from a nitric acid tank (14) located outside of the treating tank via a pump (15) and piping (16). This nitric acid feed port may be positioned at the front portion of the first treating tank. It essentially suffices wherever the feed port is positioned so long as nitric acid is added to the treated raw material after it has undergone the pre-treatment in the first treating tank.

Fig. 1 is a plane view of the apparatus for preparing organic fertilizer of the present invention.

Fig. 2 is a cross section along the line II - II of Fig. 1.

Fig. 3 is a cross section along the line III - III of Fig. 1.

Fig. 4 is a right-side elevation view of Fig. 1.
- 1:: First treating tank.
- 2:: Second treating tank.
- 3, 10:: Open/close gate.
- 4 :: Raw material charging hopper.
- 5:: Opening.
- 6, 13:: Geared motor
- 7, 11:: Screw conveyer.
- 7a, 11a:: Primary screw.
- 7b, 11b:: Secondary screw
- 8, 12:: Cutting/kneading means.
- 8a, 12a:: rotary blade
- 8b, 12b:: Fixed blades.
- 9:: Entrance.
- 10:: Take-out port.
- 11:: Rotary crushing blades.
- 14:: Nitric acid tank
- 15:: Pump.
- 16:: Piping.
- 17:: Nitric acid feed port.
- 18:: Raw material.

The method for composting of the present invention using the apparatus shown by the drawings is explained below.

A mixture of livestock excrements such as chicken feces and organic materials such as sawdust, woodchips, etc. which have been used as bedding (19) (raw material) is charged into the cylinder (1′) of the first treating tank (1) through the raw material charging hopper (4) and is conveyed from the rear portion to the front portion of the first treating tank by the primary screw (7a) of the screw conveyer (7) which is rotated by the motor (6). The raw material undergoes the action of the cutting/kneading means (8),while it is intensively compressed in the treating tank (1), as the secondary screw (7b) pushes the raw material in an opposite direction to that of the primary screw (7a) during said stage of conveyance. That is to say, the cutting/kneading means (8) shears and kneads the raw material while preventing by the rotary blades (8a) and the fixed blades (8b) the co-rotation of the raw material with the rotary blades (11), whereby physical decomposition comprising size reduction and fibrillation of wood contained in the raw material takes place and the temperature of the raw material concurrently rapidly goes up to 80°C or higher by the elevation of the internal pressure and the heat of friction. The fixed blades (8b) function as baffle plates and control the internal pressure and temperature by means of their adjusted lengths of protrusion. Likewise, the internal pressure and the temperature can be adjusted by adjusting the discharge rate, which action being carried out by opening or closing the open/close gate (3). The raw material pre-treated in the first treating tank (1) into a state readily reactive with nitric acid is forwarded to the rear portion of the second treating tank (2), where a predetermined quantity of nitric acid (for example, at the concentration of 67.5%) prepared in accordance with the quantity of the raw material is added from the nitric acid tank (14) via the metering pump (15) and the piping (16). The amount of nitric acid added to the raw material is 3 to 35 wt.%, preferably 8 to 18 wt.%.

The secondary raw material with which nitric acid has been mixed undergoes the same cutting/kneading process as in the first treating tank by the screw conveyer (11) and the cutting/kneading means (12) in the second treating tank which are driven by the motor (13).

During said step, the raw material in the second treating tank (2) is heated to 90°C or higher with the heat of reaction of nitric acid in addition to the heat of friction generated by compression and kneading, whereupon the reaction of composting rapidly progresses.

The thus treated material discharged from the take-out port (20) in the second treating tank (2) and the open/close gate (10) is left stand in a heap for several days, since the reaction is still in progress.

After the treated material has gone through said step, its pH value is adjusted to 6 to 9 with a lime-based or phosphate fertilizer, and is dried into marketable dry pellets.

While the raw material is compressed and kneaded in both the first and second treating tanks with its water content held down to 75% or below, it is desirable that adjustment of the water content is performed by adding finished dry pellets to said raw material.

Since the present invention comprises the foregoing, the hardly decomposable lignin and cellulose are decomposed by nitric acid and, furthermore, the decomposition and reaction are promoted by the physical size reduction and temperature elevation, with the result that said raw material is composted within a quite shorter period of time than by the conventional method.

Since nitrogen in nitric acid is converted into an effective component of fertilizer by nitration with the result that the carbon ratio in the mixture is decreased, and is oxidized into an effective component of the fertilizer with the result that aerobic decomposition is accelerated, the addition of nitric acid stimulates propagation of useful microorganisms, thus enhancing the effect of composting.

Moreover, the process capable of composting livestock excrements within a short period of time serves to eliminate such public nuisances as emission of bad odor and water pollution, and offers striking economic advantages, such that it dispenses with such space as is otherwise required. Hence, the subject process is quite valuable for the purpose of effectively utilizing livestock excrements.

## Claims

1. A method for composting of a mixture of livestock excrements and bedding wherein said mixture is treated with an acid, characterized in that the mixture of livestock excrements and bedding is kneaded with 3 to 35 wt.% of nitric acid to decompose lignin and cellulose contained in said mixture, and is chemically humified thereby.

2. A method according to claim 1, characterized in that the mixture of livestock excrements and bedding is adjusted to a water content of 75 % or less and then cut and kneaded under pressure, and to the thus treated mixture there is added 3 to 35 wt.% of nitric acid followed by kneading the mixture under an elevated pressure and maintaining its water content at 75 % or less.

3. An apparatus for preparing an organic fertilizer, comprising a first cylindrical treating tank having a raw material charging hopper at its rear portion, characterized in that said first cylindrical treating tank (1) is provided therein with a pressure-feed means and a cutting/kneading means (8) as well as is connected through a gate (3) with the rear portion of a second cylindrical treating tank (2), said second cylindrical treating tank (2) having a pressure-feed means and a cutting/kneading means (12) therein and a take-out port (10) at its front portion, the apparatus being provided also with a feed port (17) for adding nitric acid disposed at the front portion of the first tank (1) or at the rear portion of the second tank (2).

4. An apparatus according to claim 3, characterized in that the cutting/kneading means (8, 12) comprises a plurality of rotary blades (8a, 12a) attached to a rotary shaft disposed in the first and second cylindrical treating tanks (1, 2) and a plurality of fixed blades (8b, 12b) provided on the cylindrical body of the first and second cylindrical treating tanks (1, 2) in such a manner that they protrude inwardly to be positioned with their edges close to or sliding along their counterpart rotary blades (8a, 12a).

5. An apparatus according to claim 3 or 4, characterized in that the length of the fixed blades (8b, 12b) protruding inwardly into the cylindrical treating tanks (1, 2) is adjustable.

6. An apparatus according to any of the claims 3 to 5, characterized in that the pressure-feed means comprises a primary screw (7a, 11a) which conveys forward the raw material from the rear portion to the front portion of the treating tank (1, 2) and a secondary screw (7b, 11b) which is provided at the front portion of the treating tank (1, 2) and rotates in the opposite direction to that of said primary screw (7a, 11a).

## Patentansprüche

1. Verfahren zum Kompostieren eines Gemisches aus Viehexkrementen und Streu, wobei das Gemisch mit einer Säure behandelt wird, dadurch gekennzeichnet, daß das Gemisch aus Viehexkrementen und Streu zur Zersetzung von Lignin und Cellulose, die im Gemisch enthalten sind, mit 3 - 35 Gew.-% Salpetersäure verknetet und dadurch chemisch angefeuchtet wird.

2. Verfahren nach Anspruch 1, dadurch gekennzeichnet, daß das Gemisch aus Viehexkrementen und Streu auf einen Wassergehalt von 75 % oder weniger eingestellt und sodann zerschnitten und unter Druck verknetet wird und das auf diese Weise behandelte Gemisch mit 3 bis 35 Gew.-% Salpetersäure versetzt und anschließend unter einem erhöhten Druck verknetet und auf einem Wassergehalt von 75 % oder weniger gehalten wird.

3. Vorrichtung zur Herstellung eines organischen Düngemittels, umfassend einen ersten zylindrischen Behandlungsbehälter mit einem Rohmaterial-Aufgabetrichter im rückwärtigen Bereich, dadurch gekennzeichnet, daß der erste zylindrische Behandlungsbehälter (1) mit einer darin befindlichen Druck-Zufuhreinrichtung und einer Schneide/Kneteinrichtung (8) versehen ist und über einen Schieber (3) mit dem rückwärtigen Bereich eines zweiten zylindrischen Behandlungsbehälters (2) verbunden ist, wobei im zweiten zylindrischen Behandlungsbehälter (2) eine Druck-Zufuhreinrichtung und eine Schneide/Kneteinrichtung (12) sowie eine Entnahmeeinrichtung (10) an ihrem Vorderbereich vorgesehen sind, wobei die Vorrichtung ferner mit einer Zufuhröffnung (17) zur Zugabe von Salpetersäure am Vorderbereich des ersten Behälters (1) oder am rückwärtigen Bereich des zweiten Behälters (2) versehen ist.

4. Vorrichtung nach Anspruch 3, dadurch gekennzeichnet, daß die Schneide/Kneteinrichtung (8, 12) ein Mehrzahl von rotierenden Flügeln (8a, 12a), die an einer im ersten und zweiten zylindrischen Behandlungsbehälter (1, 2) angeordneten rotierenden Welle befestigt sind, und eine Mehrzahl von festen Flügeln (8b, 12b), die am zylindrischen Körper des ersten und zweiten zylindrischen Behandlungsbehälters (1, 2) so angeordnet sind, daß sie in Richtung nach innen vorstehen und mit ihren Kanten eng an den rotierenden Gegenflügeln (8a, 12a) anliegen oder an diesen entlang gleiten, umfaßt.

5. Vorrichtung nach Anspruch 3 oder 4, dadurch gekennzeichnet, daß die Länge der festen Flügel (8b, 12b), die in Richtung nach innen in den zylindrischen Behandlungsbehälter (1, 2) vorstehen, einstellbar ist.

6. Vorrichtung nach einem der Ansprüche 3 bis 5, dadurch gekennzeichnet, daß die Druck-Zufuhreinrichtung eine erste Schnecke (7a, 11a), die das Rohmaterial aus dem rückwärtigen Bereich in den Vorderbereich des Behandlungsbehälters (1, 2) transportiert, und eine zweite Schnecke (7b, 11b) umfaßt, die am Vorderbereich des Behandlungsbehälters (1, 2) vorgesehen ist und sich in der Gegenrichtung zur ersten Schnecke (7a, 11a) dreht.

## Revendications

1. Un procédé de compostage d'un mélange d'excréments d'animaux et de litières dans lequel ledit mélange est traité avec un acide, caractérisé en ce que le mélange d'excréments d'animaux et de litières est malaxé avec 3 à 35 % en poids d'acide nitrique pour décomposer la lignine et la cellulose contenues dans ledit mélange, et est ainsi humidifié chimiquement.

2. Un procédé selon la revendication 1, caractérisé en ce que le mélange d'excréments d'animaux et de litières est ajusté à une teneur en eau de 75 % ou moins et, ensuite, haché et malaxé sous pression, et qu'il est ensuite ajouté au mélange ainsi traité 3 à 35 % en poids d'acide nitrique, suivi du malaxage du mélange sous haute pression et en maintenant sa teneur en eau à 75 % ou moins.

3. Un appareil de préparation d'un engrais organique comprenant un premier réservoir de traitement cylindrique comprenant une trémie de chargement de matière première à sa partie arrière, caractérisé en ce que ledit premier réservoir de traitement cylindrique (1) est pourvu, à l'intérieur, de moyens d'alimentation sous pression et de moyens de hachage/malaxage (8) et est relié également, par l'intermédiaire d'une vanne (3), à la partie arrière d'un second réservoir de traitement cylindrique (2), ledit second réservoir de traitement cylindrique (2) comprenant à l'intérieur des moyens d'alimentation sous pression et des moyens de hachage/malaxage (12) et un orifice de sortie (10) dans sa partie avant, l'appareil étant pourvu également d'un orifice d'alimentation (17) pour ajouter de l'acide nitrique, disposé dans la partie avant du premier réservoir (1) ou dans la partie arrière du second réservoir (2).

4. Un appareil selon la revendication 3, caractérisé en ce que les moyens de hachage/malaxage (8, 12) comprennent une pluralité de lames tournantes (8a, 12a) fixées sur un arbre tournant disposé dans les premier et second réservoirs de traitement cylindriques (1, 2) et une pluralité de lames fixes (8b, 12b) prévues sur le corps cylindrique des premier et second réservoirs de traitement cylindriques (1, 2), de manière à être en saillie à l'intérieur dans une position où leurs bords sont voisins ou glissent le long de leurs lames tournantes correspondantes (8a, 12a).

5. Un appareil selon la revendication 3 ou 4, caractérisé en ce que la longueur des lames fixes (8b, 12b) en saillie à l'intérieur des réservoirs de traitement cylindriques (1, 2) est réglable.

6. Un appareil selon l'une quelconque des revendications 3 à 5, caractérisé en ce que les moyens d'alimentation sous pression comprennent une vis sans fin primaire (7a, 11a) qui achemine vers l'avant la matière première de la partie arrière vers la partie avant du réservoir de traitement (1, 2) et une vis sans fin secondaire (7b, 11b), prévue dans la partie avant du réservoir de traitement (1, 2) et tournant dans la direction opposée à celle de ladite vis sans fin primaire (7a, 11a).
